# EUROPÄISCHE PATENTANMELDUNG

(11) **EP 0 701 339 A2**
(43) Veröffentlichungstag der Anmeldung: **13.03.1996**
(21) Anmeldenummer: 95112686.1
(22) Anmeldetag: 11.08.1995
(51) Int. Cl.: H04B 10/18

(54) **Verfahren zur Kompensation der Dispersion in einem optischen Übertragungsmedium**

(30) Priorität: 18.08.1994 DE 4429286
(71) Anmelder: SIEMENS AKTIENGESELLSCHAFT, D-80333 München (DE)
(72) Erfinder: Hörmann, Ewald, Dipl. Ing., D-83607 Holzkirchen (DE)

(57) **Zusammenfassung**

Die Übertragung von optischen Signalen über Glasfaserstrecken wird in der Regel durch die Dispersion der Faser begrenzt. Die beim Stand der Technik existierenden Lösungen sind mit Nachteilen verbunden. Die Erfindung schafft hier Abhile, indem die Informationen in lediglich einem optischen Seitenband über die Glasfaserstrecke übertragen und im Elektrischen entzerrt werden.

## Beschreibung

Die Erfindung betrifft ein Verfahren gemäß dem Oberbegriff des Patentanspruchs 1.

Die Übertragung von Informationen mittels optischer Signale über Glasfaserstrecken ist in der Regel durch die Dispersion der Glasfaser begrenzt. Üblicherweise wird für die optische Übertragung das elektrische Basisbandsignal mit dem optischen Trägersignal gemischt, so daß ein oberes und ein unteres Seitenband entsteht. Bei der optischen Übertragung über eine dispersive Glasfaser werden die beiden Seitenbänder unterschiedlich in der Phase verzerrt. Bei der im Empfänger erfolgten Umsetzung zurück in elektrische Signale werden die beiden Seitenbänder addiert. Dies hat aber zur Folge, daß eine Entzerrung im Elektrischen in der Regel dann nicht mehr möglich ist.

Generell werden zur Unterdrückung der Dispersion der Glasfaser bei den üblichen Übertragungsprozeduren Verfahren angewandt, die zum Beispiel am Dispersions-Nullpunkt der Glasfaser arbeiten. Dies bedeutet, daß die optische Sendeeinrichtung optische Signale bei 1310 nm aussendet. Vorteilhaft bei dieser Vorgehensweise ist, daß bei dieser Wellenlänge die Dispersion fast nicht in Erscheinung tritt. Dieser Vorteil geht jedoch mit einer relativ hohen Dämpfung einher. Diese Verhältnisse werden in IEEE Photonics Technology Letters, Vol.6, No.1, January 1994 "Planar Lightwave Circuit Optical Dispersion Equalizer" angesprochen.

Der Erfindung liegt die Aufgabe zugrunde, die Übertragung von Informationenn auf optischem Wege derart vorzunehmen, daß die oben erläuterten Nachteile vermieden werden.

Die Erfindung wird, ausgehend vom Oberbegriff des Patentanspruchs 1,durch die im kennzeichnenden Teil definierten Merkmale gelöst.

Vorteilhaft an der Erfindung ist das Übertragen der Informationen in lediglich einem optischen Seitenband. Damit ist der Vorteil verbunden, daß keine Überlappung des oberen bzw. unteren Seitenbandes entsteht und somit eine elektrische Entzerrung beim Empfänger oder eine Vorverzerrung beim Sender leicht durchführbar ist.

Besondere Ausgestaltungen der Erfindung sind in den Unteransprüchen angegeben.

Gemäß Anspruch 2 ist vorgesehen, daß das jeweilige optische Seitenband erzeugt wird, indem das elektrische Basisbandsignal jeweils zwei, parallel zueinander angeordneten Übertragungskreisen, die in einer Addiervorrichtung oder einer Subtrahiervorrichtung wieder zusammengeführt werden, zugeführt wird, wobei jeder dieser Übertragungskreise einen ersten Modulator und einen zweiten Modulator mit jeweils dazwischengeschaltetem Tiefpaßfilter aufweist, wobei dem ersten Modulator ein erstes und zweites elektrisches Trägersignal und dem zweiten Modulator ein erstes und zweites optisches Trägersignal zugeführt wird und wobei das erste und zweite elektrische Trägersignal bzw. das erste und zweite optische Trägersignal gegeneinander eine Phasendifferenz von 90° aufweisen. Damit ist der Vorteil verbunden, daß breitbandige Signale umgesetzt werden können ohne dieselben mit einer Phasendifferenz von 90° erzeugen zu müssen.

Gemäß Anspruch 3 ist vorgesehen, daß die Frequenz des elektrischen Trägersignals und die Sperrflanke der Tiefpässe in den Bereich des oberen Randes des Bandes des Basissignals gelegt werden. Gegebenenfalls können diese noch höher gelegt werden. Damit ist der Vorteil verbunden, daß sich der optische Träger nicht nachteilig auswirkt.

Gemäß Anspruch 4 ist vorgesehen, daß die zweiten Modulatoren mit Mach-Zehnder Interferometer realisierbar sind. Damit ist der Vorteil einer besonders effizienten Realisierung der Endstufe eines optischen Einseitenbandmodulators verbunden.

Gemäß Anspruch 5 ist vorgesehen, daß die Entzerrung in der elektrischen Sendeeinrichtung durchgeführt wird. Damit ist der Vorteil verbunden, daß der Aufwand beim Empfänger sehr gering gehalten werden kann.

Gemäß Anspruch 6 ist vorgesehen, daß die Entzerrung in der elektrischen Empfangseinrichtung durchgeführt wird. Damit ist der Vorteil verbunden, daß die Entzerrung beim Empfänger optimiert werden kann.

Gemäß Anspruch 7 ist vorgesehen, daß das jeweilige optische Seitenband erzeugt wird, indem das elektrische Basisbandsignal gesondert mit einer Phasendifferenz von 90° zwei optischen Modulatoren zugeführt wird, deren optische Trägerfrequenzen gegeneinander eine Phasendifferenz von 90° aufweisen und bei deren Addition bzw. Subtraktion ein Seitenband unterdrückt wird. Damit ist der Vorteil verbunden, daß lediglich zwei Modulatoren benötigt werden.

Gemäß Anspruch 8 ist vorgesehen, daß das jeweilige optische Seitenband mit Träger erzeugt wird, indem das zu übertragende Seitenband mit Träger durch Übertragen durch eine Filteranordung gewonnen wird. Damit ist der Vorteil verbunden, daß eine Mehrzahl von Filtern verwendet werden kann.

Gemäß Anspruch 9 ist vorgesehen, daß durch eine Filteranordnung ein Resteinseitenband mit Träger erzeugt wird. Damit ist der Vorteil verbunden, daß die Mittel zum unterdrücken des einen Seitenbandes gering gehalten werden können.

Gemäß Anspruch 10 ist vorgesehen, daß eine Entzerrung durchgeführt wird, indem die Glasfaserstrecke geteilt wird, wobei in der ersten Hälfte das eine und in der zweiten Hälfte das andere Seitenband übertragen wird. Damit ist der Vorteil verbunden, daß die Entzerrung bereits während der Übertragung vorgenommen wird, und weder in der Empfangseinrichtung noch in der Sendeeinrichtung Maßnahmen zur Entzerrung getroffen werden müssen.

Die Erfindung wird im folgenden anhand eines Ausführungsbeispiels näher erläutert.

Es zeigen
- Figur 1: eine Anordnung, in der das erfindungsgemäße Verfahren zum Ablauf gelangt
- Figur 2: den Funktionsablauf des erfindungsgemäßen Verfahrens, wie es in der Sendeeinrichtung zum Ablauf gelangt
- Figur 3: die Verhältnisse beim Empfänger
- Figur 4: die Endstufe eines optischen Einseitenbandmodulators

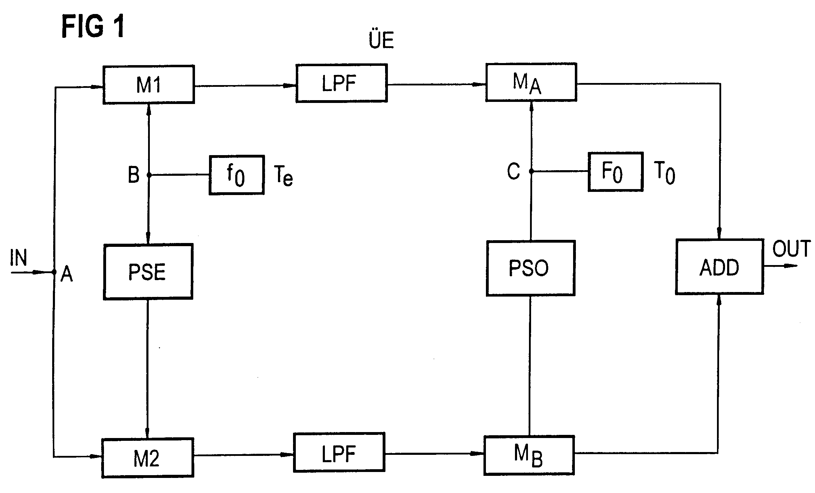

In Fig.1 ist eine Anordnung aufgezeigt,in der das erfindungsgemäße Verfahren zum Ablauf gelangt. Dabei wird das elektrische Basisbandsignal IN am Punkt A einer Übertragungseinrichtung ÜE zugeführt. Diese besteht aus zwei, zueinander parallel angeordneten Übertragungskreisen. Jeder dieser Übertragungskreise weist eingangsseitig jeweils einen Modulator M₁ bzw.M₂ auf. Beide Modulatoren M₁, M₂ sind zum einen mit einer Einrichtung PSE verbunden. An die Verbindung zwischen dem Modulator M₁ und der Einrichtung PSE ist in Punkt B eine Vorrichtung Tₑ geschaltet, in der ein elektrisches Trägersignal f₀ erzeugt wird. Zum anderen sind den Modulatoren M₁, M₂ jeweils ein Tiefpaßfilter LPF nachgeschaltet. Dieselben sind ausgangsseitig mit weiteren Modulatoren M_{A}, M_{B} verbunden, die ihrerseits ausgangsseitig einer Addiervorrichtung ADD zugeführt sind. Beide Modulatoren M_{A}, M_{B} sind weiterhin mit einer Einrichtung PSO verbunden. Im Punkt C ist eine Vorrichtung Tₒ aufgeschaltet, in der ein optisches Trägersignal Fₒ erzeugt wird. Die Addiervorrichtung ADD sendet letztendlich das optische Signal auf die Glasfaserstrecke.

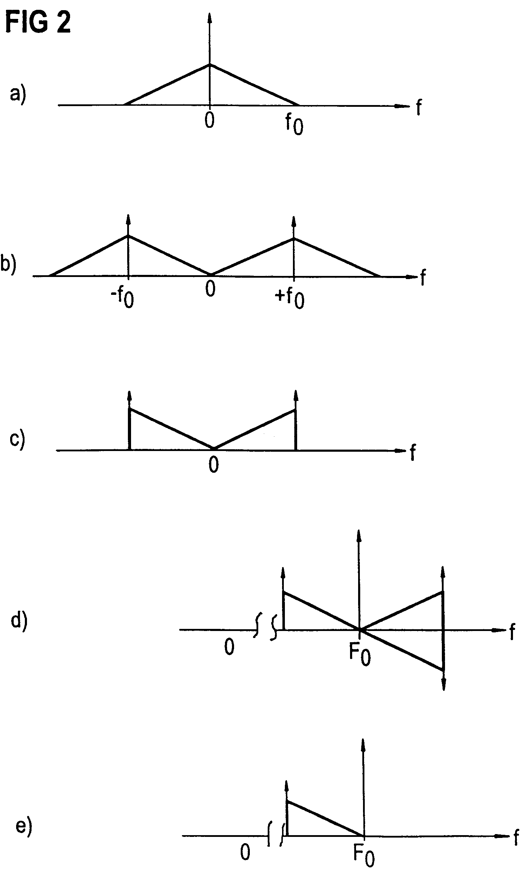

Im folgenden wird das erfindungsgemäße Verfahren erläutert, wie es in einer optischen Sendeeinrichtung zum Ablauf gelangt. Die entsprechenden Verhältnisse sind in Fig.2 aufgezeigt.

Fig.2a zeigt zunächst das elektrische Basissignals IN mit seiner definierten Bandbreite, wie es dem Punkt A der Schaltungsanordnung nach Fig.1 zugeführt wird. Dort erfolgt eine Aufsplittung desselben, wobei die beiden derart entstandenen Signale jeweils dem Modulator M₁ bzw.M₂ zugefürt werden. Insbesondere wurde darauf Wert gelegt, daß die elektrische Trägerfrequenz f₀ sowie die Sperrflanke der Tiefpässe an den oberen Rand der Bandbreite gelegt wurden. Für eine einfache Demodulation ist der Zusatz der Trägerfrequenz f₀ notwendig.

Fig.2b zeigt die Verhältnisse am Ausgang der Modulatoren M₁, M₂ mit zwei Seitenbändern. Die elektrische Trägerfrequenz f₀ wird hier nicht unterdrückt. Sie wird von der Vorrichtung Tₑ erzeugt und dem Modulator M₁ zum einen und über die Einrichtung PSE dem Modulator M₂ zum anderen zugeführt. Die Einrichtung PSE führt dabei eine Phasenverschiebung von 90° durch.

Fig.2c zeigt die Verhältnisse nach den Tiefpaßfiltern LPF. Hieraus ist ersichtlich, wie die Frequenzen oberhalb der Trägerfrequenz abgeschnitten werden. Die elektrische Trägerfrequenz f₀ selbst wird auch hier nicht unterdrückt.

Fig.2d zeigt die Verhältnisse unmittelbar am Ausgang der beiden Modulatoren M_{A}, M_{B}. Daraus ist ersichtlich, wie das modulierte Signal in Kehrlage erscheint. Dabei gilt es zu beachten, daß dasselbe beim Empfänger über einen Modulator und einen Tiefpaß wieder gedreht werden muß. Beiden Modulatoren wird ein optisches Trägersignal F₀ zugeführt, das in der Vorrichtung Tₒ erzeugt wird. Der Modulator M_{A} erhält dasselbe direkt, während der Modulator M_{B} dasselbe über eine Einrichtung PSO zugeführt bekommt, in der eine Phasenverschiebung von 90° vorgenommen wird. Die dem Ausgang beider Modulatoren entstammenden Signale werden dann der Addiervorrichtung ADD zugeführt.

Fig.2e zeigt die Verhältnisse am Ausgang OUT unmittelbar im Anschluß an die Addiervorrichtung ADD. Von hier wird das optische Signal in der in Fig.2e aufgezeigten Weise auf die Glasfaserstrecke gegeben. Insbesondere ist die Übertragung mittels lediglich einem Seitenband ersichtlich.

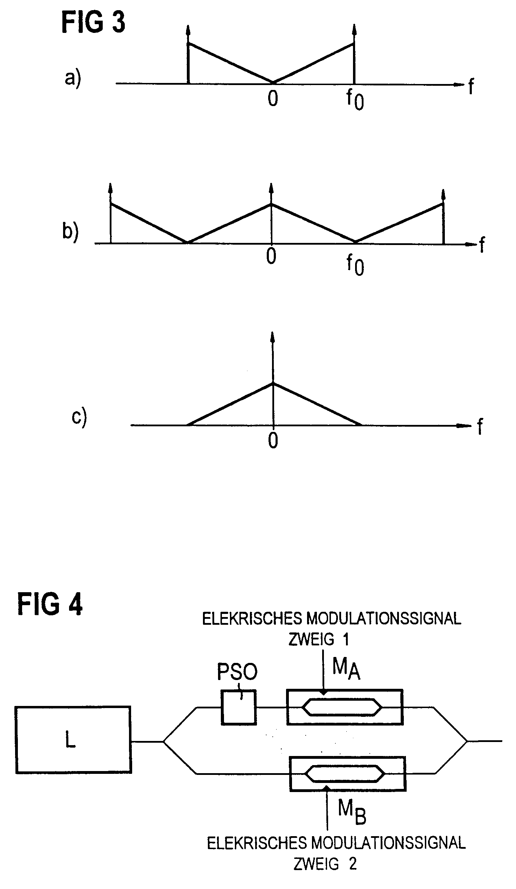

Beim Empfänger kann das durch die Sendeeinrichtung nach Fig.2 modifizierte optische Signal problemlos entzerrt werden, weil die Phasenverzerrungen der optischen Übertragungsstrecke in das Elektrische abgebildet werden. Es können vergleichbare Entzerrer, wie sie aus der kohärenten Übertragungstechnik bekannt sind, verwendet werden ( siehe hierzu insbesondere Journal of Lightwave Technology, Vol.8, No.3, March 1990, Page 367-375). Die Verhältnisse beim Empfänger zur Demodulation werden in Fig.3 erläutert:

Fig.3a zeigt die Verhältnisse beim Empfänger, wie sie sich unmittelbar nach einem Fotodetektor ergeben.

Fig.3b zeigt die Verhältnisse beim Empfänger nach der Modulation mit der elektrischen Trägerfrequenz f₀.

In Fig.3c sind die Verhältnisse unmittelbar nach dem Filtern mit einem Tiefpaß dargestellt, womit das urspüngliche elektrische Basissignal wiederhergestellt ist. Dies wird durch Vergleich mit den nach Fig.2a aufgezeigten Verhältnissen ersichtlich.

In Fig.4 ist als besondere Ausgestaltung der Erfindung die Endstufe eines optischen Einseitenbandmodulators dargestellt. Die beiden Modulatoren M_{A}, M_{B} sind dabei als Mach-Zehnder-Interferometer dargestellt. Die Laserquelle ist identisch mit der in Fig.1 aufgezeigten Vorrichtung Tₒ. Beiden Modulatoren wird jeweils ein elektrisches Modulationssignal zugeführt.

In einer Ausgestaltung der Erfindung wird das eine optische Seitenband nach der allseits bekannten Phasenmethode erzeugt.

In einer weiteren Ausgestaltung der Erfindung wird ein Resteinseitenband mit Hilfe der ebenfalls bekannten Filtermethode erzeugt. Dabei kann ein Resteinseitenband mit Träger erzeugt werden. Da in der Regel digitale, optische Verfahren zum Ablauf gelangen, wird diese Ausgestaltung in vielen Fällen ausreichend sein, weil durch die Dispersion in erster Linie die hohen Frequenzanteile gestört werden. Als Filter kommen gekoppelte Resonatoren, gechirmte Gratingfilter oder zusammengesetzte Filter, deren Filterkante durch ein enges Sperrfilter verbessert wird, in Frage.

Abschließend sei noch angemerkt, daß zur Kompensation der Dispersion einer Glasfaser sich eine Reihe weiterer Möglichkeiten ergeben. So kann beispielsweise die Kompensation elektrisch entweder beim Sender oder beim Empfänger durchgeführt werden. Hierzu wird die optische Phasenverzerrung, die sich direkt ins Basisband abbildet, durch einen geeigneten Vierpol beim Sender vorverzerrt bzw. beim Empfänger entzerrt. Eine andere Alternative besteht darin, die Glasfaserstrecke zu teilen, wobei in der ersten Hälfte das eine und in der zweiten Hälfte das andere Seitenband übertragen wird.

## Patentansprüche

1. Verfahren zur Kompensation der Dispersion in einem optischen Übertragungsmedium, mit
einer optischen Sendeeinrichtung, in der aus einem elektrischen Basissignal (IN) ein optisches Signal, bestehend aus einem optischen Trägersignal (F₀) und wenigstens zwei, die zu übertragenden Informationen umfassenden Seitenbändern, geformt wird und mittels der das optische Signal über das optische Übertragungsmedium einer Empfangseinrichtung übergeben wird, und mit Entzerrungsmittel, mittels der dafür Sorge getragen wird, daß das elektrische Signal in dem ursprünglichen ausgesandten Zustand den der Empfangseinrichtung nachgeschalteten Einrichtungen übergeben wird,
**dadurch gekennzeichnet,**
daß die Informationen in lediglich einem der optischen Seitenbänder übertragen werden, und die Entzerrungsmittel in der Empfangseinrichtung und/oder in der Sendeeinrichtung auf elektrischem Wege etwaige, während des Übertragungsvorganges erfolgte Veränderungen des optischen Signals kompensieren.

2. Verfahren nach Anspruch 1,
**dadurch gekennzeichnet,**
daß das jeweilige optische Seitenband erzeugt wird, indem das elektrische Basisbandsignal (IN) jeweils zwei, parallel zueinander angeordneten Übertragungskeisen, die in einer Addiervorrichtung (ADD) oder einer Subtrahiervorrichtung wieder zusammengeführt werden, zugeführt wird, wobei jeder dieser Übertragungskreise einen ersten Modulator (M₁ bzw.M₂) und einen zweiten Modulator (M_{A} bzw.M_{B}) mit dazwischengeschaltetem Tiefpaßfilter (LPF) aufweist, wobei den ersten Modulatoren ein erstes und zweites elektrisches Trägersignal (f₀) und den zweiten Modulatoren ein erstes und zweites optisches Trägersignal (F₀) zugeführt wird und wobei das erste und zweite elektrische Trägersignal bzw. das erste und zweite optische Trägersignal gegeneinander eine Phasendifferenz (PS) von 90° aufweisen.

3. Verfahren nach Anspruch 1 oder 2,
**dadurch gekennzeichnet,**
daß die Frequenz des elektrischen Trägersignals (f₀) und die Sperrflanke der Tiefpässe in den Bereich des oberen Randes des Bandes des Basisbandsignals (IN) gelegt werden.

4. Verfahren nach Anspruch 1 bis 3
**dadurch gekennzeichnet,**
daß die zweiten Modulatoren (M_{A},M_{B}) mit Mach-Zehnder Interferometer realisierbar sind.

5. Verfahren nach Anspruch 1
**dadurch gekennzeichnet,**
daß die Entzerrung in der elektrischen Sendeeinrichtung durchgeführt wird.

6. Verfahren nach Anspruch 1
**dadurch gekennzeichnet,**
daß die Entzerrungs in der elektrischen Empfangseinrichtung durchgeführt wird.

7. Verfahren nach Anspruch 1,
**dadurch gekennzeichnet,**
daß das jeweilige optische Seitenband erzeugt wird, indem das elektrische Basisbandsignal gesondert mit einer Phasendifferenz von 90° zwei optischen Modulatoren zugeführt wird, deren optische Trägerfrequenzen gegeneinander eine Phasendifferenz von 90° aufweist und bei deren Addition bzw. Subtraktion ein Seitenband unterdrückt wird.

8. Verfahren nach Anspruch 1,
**dadurch gekennzeichnet,**
daß das jeweilige optische Seitenband mit Träger erzeugt wird, indem das zu übertragende Seitenband mit Träger durch Übertragen durch eine Filteranordung gewonnen wird.

9. Verfahren nach Anspruch 1
**dadurch gekennzeichnet,**
daß durch eine Filteranordnung ein Resteinseitenband mit Träger erzeugt wird.

10. Verfahren nach Anspruch 1
**dadurch gekennzeichnet,**
daß eine Entzerrung durchgeführt wird, indem die Glasfaserstrecke geteilt wird, wobei in der ersten Hälfte das eine und in der zweiten Hälfte das andere Seitenband übertragen wird.
